# EUROPÄISCHE PATENTSCHRIFT

(11) **EP 1 622 240 B1**
(45) Veröffentlichungstag und Bekanntmachung des Hinweises auf die Patenterteilung: **23.12.2015**
(21) Anmeldenummer: 05014312.2
(22) Anmeldetag: 01.07.2005
(51) Int. Cl.: H02K 5/24, H02K 5/22, H02K 7/14, H02K 5/08

(54) **Gehäuse zur Aufnahme eines Elektromotors**
Housing for receiving an electrical motor
Boîtier pour loger un moteur électrique

(30) Priorität: 29.07.2004 DE 102004037048
(43) Veröffentlichungstag der Anmeldung: 01.02.2006
(73) Patentinhaber: MAHLE Behr GmbH & Co. KG, 70469 Stuttgart (DE)
(72) Erfinder: Müller, Harald, 70469 Stuttgart (DE); Schubert, Stephan, 71364 Winnenden (DE)
(74) Vertreter: Grauel, Andreas

(56) Entgegenhaltungen:
- EP-A1- 1 308 632
- EP-A2- 1 404 008
- WO-A2-03/067738
- DE-A1- 10 019 572

## Beschreibung

Die Erfindung betrifft ein Gehäuse zur Aufnahme eines Elektromotors, insbesondere eines Gebläsemotors gemäß dem Oberbegriff des Anspruchs 1, sowie eine Verfahren zur Montage eines Elektromotors in einem Gehäuse.

Um eine Schwingungsentkopplung eines Gebläsemotors zu gewährleisten und damit eine Geräuschentstehung an einem Gebläsegehäuse eines Kraftfahrzeugs zu vermeiden, ist aus der DE 42 40 776 C1 bekannt, ein Gehäuse mit einem den Gebläsemotor aufnehmenden Motorhalter und einer geräusch- und schwingungsdämpfenden Befestigung mittels eines Käfigs auszubilden. Motorhalter und Käfig sind im Wesentlichen zylindrisch, beziehungsweise in Topf- oder Becherform ausgeführt. Motorhalter und Käfig sind über, zur Aufnahme von Radialkräften ausgebildete elastische Glieder gegeneinander abgestützt. Durch diese elastischen Glieder muss in aufwändigerweise ein, den Motorhalter und Käfig miteinander verbindendes Befestigungselement, hindurchgeführt werden.

In der DE 43 29 804 wird zur Schwingungsentkopplung eines Elektromotors insbesondere zum Antrieb eines Gebläserads einer Heizungs- oder Klimaanlage eines Kraftfahrzeugs vorgeschlagen, Abstützelemente aus einem gummielastischem Material verteilt über den Umfang des Polrings eines Elektromotors anzuordnen. Für die Fixierung der Abstützelemente zwischen Polring und Motorhalter ist ein Adapter erforderlich. Der Zusammenbau von Adapter, Motorhalter und Motor erfolgt durch Ineinanderstecken in axialer Richtung.

In der EP 928 900 B1 ist eine elektrische Lüftereinheit für eine Fahrzeugklimaanlage beschrieben, die ein Gehäuse aufweist, in welches ein Elektromotor zum Antrieb des Lüfters axial einführbar ist. Am Elektromotor wird ein erstes elektrisches Verbindungselement vormontiert. Um diese vormontierte Einheit in das Gehäuse einzuführen, ist für das auskragende elektrische Verbindungselement ein Führungskanal vorgesehen. Der Motor muss also genau so eingeschoben werden, dass sich das elektrische Verbindungselement umfänglich an der Stelle des Führungskanals befindet.

In der DE 100 19 572 A1 wird eine Motorhalterung mit einer Dämpfungseinheit beschrieben, die aus einer elastischen Manschette besteht, die um den Motor gewickelt wird, um zusammen mit diesem in ein Gehäuse eingesetzt zu werden.

Die Motorhalter aus dem Stand der Technik lassen jedoch Wünsche hinsichtlich einer einfachen Schwingungsentkopplung und Montage eines Elektromotors in einem Gehäuse offen.

Es ist daher Aufgabe der Erfindung, ein verbessertes Gehäuse zur Aufnahme eines Elektromotors zur Verfügung zu stellen.

Diese Aufgabe wird gelöst durch ein Gehäuse zur Aufnahme eines Elektromotors, insbesondere eines Gebläsemotors mit den Merkmalen des Anspruchs 1 und ein Verfahren zur Montage eines Elektromotors mit einem Gehäuse gemäß Anspruch 18.

Vorteilhafte Ausgestaltungen sind Gegenstand der Unteransprüche.

Erfindungsgemäß ist ein Gehäuse zur Aufnahme eines Elektromotors, insbesondere eines Gebläsemotors vorgesehen, welches zumindest aus einem ersten und einem zweiten Gehäuseteil besteht. Die zumindest erste und zweite Gehäusehälfte weisen eine gemeinsame Trennebene auf, wobei die Trennebene im Wesentlichen durch eine Ebene in der die Motorachse liegt oder einer dazu parallelen Ebene, gebildet wird.

Vorteilhafterweise weist zumindest ein Gehäuseteil auf der Innenseite, also der dem Motor zugewandten Innenfläche des Gehäuseteils, zumindest eine Aufnahmeausnehmung auf. Zumindest ein zweites Gehäuseteil weist auf der Innenseite zumindest zwei Aufnahmeausnehmungen auf, beziehungsweise in einer weiteren Ausführung weisen zumindest 2 Gehäuseteile (1, 2) auf der Innenseite insgesamt zumindest drei Aufnahmeausnehmungen (11) auf.

In diese zumindest eine Aufnahmeausnehmung oder Aufnahmeausnehmungen ist jeweils ein Dämpfungskörper insbesondere aus einem elastomeren Kunststoff, beispielsweise Silikon oder aus Gummi bestehend, einlegbar.

Bevorzugt ist der Dämpfungskörper im Wesentlichen quader-, tonnen-, oder kissenförmig ausgebildet und form- oder reibschlüssig in seiner Lage in der Ausnehmung fixierbar.

In einer weiteren Ausgestaltung der Erfindung sind zwei Aufnahmeausnehmungen in einer ersten Gehäusehälfte, in die jeweils ein Dämpfungskörper einlegbar ist, im Wesentlichen symmetrisch zur Mittelachse des Gehäuses angeordnet. Es ist vorteilhaft, in einer zweiten Gehäusehälfte, eine Aufnahmeausnehmung vorzusehen, die im Wesentlichen umfangseitig mittig angeordnet ist, so dass sich nach dem Zusammenfügen der beiden Gehäusehälften umfänglich im Inneren des Gehäuses in einem Winkelabstand von etwa 120°, drei Aufnahmeausnehmungen für Dämpfungskörper ergeben.

Bevorzugt weisen eine erste und/oder eine zweite Gehäusehälfte ein Aufnahmeelement im Bereich der Trennebene auf. Dieses kann von der Gehäusewandung nach außen abstehend ausgeführt sein. Die Aufnahmeelemente in einer ersten und einer zweiten Gehäusehälfte, sind korrespondierend zueinander ausgeführt, so dass sie nach dem Zusammenbau einen gemeinsamen, zumindest teilweise umschlossenen Bereich bilden.

Vorteilhafterweise ist in das Aufnahmeelement im Bereich der Trennebene ein Element für eine elektrische Steckerverbindung, beispielsweise ein Verbindungsstück welches, die vom Elektromotor abgehenden elektrischen Leitungen aufnimmt, einlegbar, wobei dieses form- oder reibschlüssig in seiner Lage in der Ausnehmung im Bereich der Trennebene fixierbar ist. Zur Versorgung des Elektromotors mit elektrischer Energie, kann in dieses, im Gehäuse fixierten Verbindungsstück von außen ein Stecker mit den entsprechenden Versorgungsleitungen eingeführt beziehungsweise eingesteckt werden.

Die Bereiche der Trennebene der ersten und zweiten Gehäusehälften, sind vorteilhafterweise so ausgeführt, dass die beiden Gehäusehälften im Wesentlichen nach Art einer Nut-Feder-Verbindung zusammensteckbar sind. Eine Gehäusehälfte weist dabei zumindest bereichsweise einen umlaufenden federartigen Steg auf, wobei die zweite Gehäusehälfte eine zumindest bereichsweise umlaufende Nut aufweist. Diese Nut kann in einer rudimentären Alternative als bereichsweise in der Trennebene ausgeführte Stege ausgebildet sein, so dass diese entweder in die Innenseite und/oder Außenseite der Stege der ersten Gehäusehälfte eingreifen beziehungsweise mit diesen zusammenwirken.

In einer weiteren erfindungsgemäßen Ausführung, sind die Gehäusehälften zusammenclipsbar und/oder durch außerhalb des Gehäuses anzubringende Klammern in ihrer Lage zueinander fixierbar. Insbesondere sind die beiden Gehäusehälften mittels einer Schraubverbindung verbunden. In den Gehäusehälften sind dazu entsprechende Schraubführungen vorgesehen.

Ferner ist das erfindungsgemäße Gehäuse mit einem Elektromotor, insbesondere einem Gebläsemotor ausgeführt, der eine umfängliche Einfassung aufweist mit zu den Aufnahmeausnehmungen des Gehäuses korrespondierenden Aufnahmeschächten.

In einer erfindungsgemäßen Weiterbildung ist eine Klimatisierungs- und/oder Heizeinrichtung, insbesondere für ein Kraftfahrzeug mit einem Gebläse, einem Heizelement, mindestens einem Steuerelement zur Beeinflussung von Luftströmungen und/oder einem Verdampfer, sowie mit einem erfindungsgemäßen Gehäuse für den Gebläsemotor ausgestattet.

In einer weiteren erfindungsgemäßen Ausgestaltung des Gehäuses, besteht dieses aus mehr als zwei Gehäusehälften, beispielsweise aus drei, vier oder mehr Gehäuseteilen. Vorteilhafterweise ist dann in zumindest drei Gehäuseteilen je eine Aufnahmeausnehmung und in zumindest einem Trennbereich zweier Gehäuseteile ein Aufnahmeelement vorgesehen.

Vorteilhafterweise erfolgt die Montage eines Elektromotors, insbesondere eines Gebläsemotors mit einem erfindungsgemäßen Gehäuse in folgenden Schritten:
In eine erste Gehäusehälfte wird zumindest ein Dämpfungskörper in zumindest eine Aufnahmeausnehmung eingelegt. Anschließend wird der Elektromotor mit einer umfänglichen Einfassung in die erste Gehäusehälfte eingelegt. Zur Herstellung einer elektrischen Verbindung zum Elektromotor wird in ein Aufnahmeelement der ersten Gehäusehälfte ein Element für eine elektrische Steckerverbindung eingelegt. In den Aufnahmeschacht an der Einfassung des Elektromotors, wird an der, der ersten Gehäusehälfte abgewandten Seite ein Dämpfungskörper eingebracht. Danach wird, nach dem Prinzip einer Nut/Federverbindung die zweite Gehäusehälfte auf die erste Gehäusehälfte gesteckt und die Gehäusehälften miteinander verbunden, insbesondere verschraubt.

Im Folgenden wird die Erfindung anhand von einem Ausführungsbeispiel, teilweise unter Bezugnahme auf die Zeichnung, im Einzelnen erläutert. In der Zeichnung zeigen:
- Fig. 1: eine perspektivische Ansicht eines unteren Gehäuseteils zur Aufnahme eines Gebläsemotors,
- Fig. 2: eine perspektivische Ansicht eines unteren Gehäuseteils zur Aufnahme eines Gebläsemotors mit eingelegten Dämpfungskörpern,
- Fig. 3: eine perspektivische Ansicht eines unteren Gehäuseteils mit eingelegtem Gebläsemotor und Lüfterrad,
- Fig. 4: eine perspektivische Ansicht eines unteren Gehäuseteils mit eingelegtem Gebläsemotor, Lüfterrad, und Dämpfungskörper,
- Fig. 5: eine perspektivische Ansicht eines Gehäuses, bestehend aus unterem und oberen Gehäuseteil mit Gebläsemotor und Lüfterrad im geschlossenen Zustand und
- Fig. 6: eine perspektivische Ansicht eines zweiten Ausführungsbeispiel eines Dämpfungskörpers.

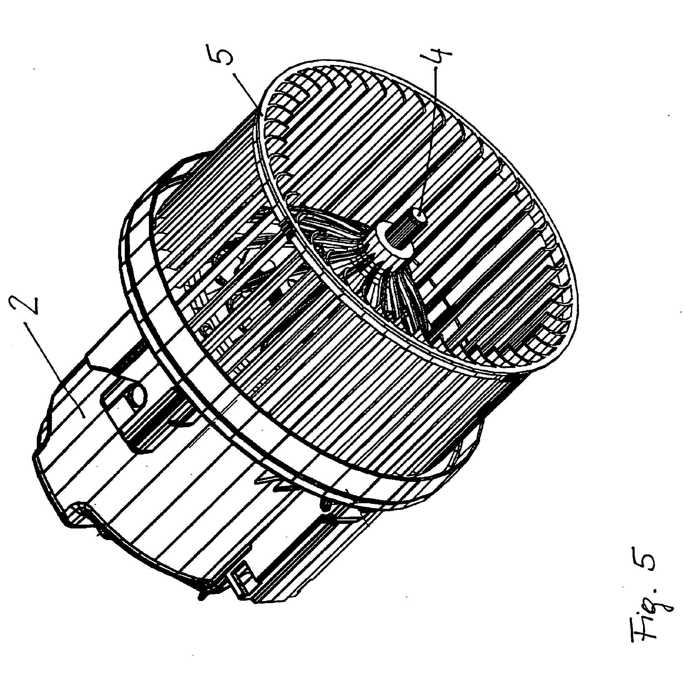

Fig.5 zeigt ein erfindungsgemäßes Gehäuse zur Aufnahme eines Gebläsemotors 3, bestehend aus einer unteren Gehäusehälfte 1 und einer oberen Gehäusehälfte 2. Der Gebläsemotor 3 trägt auf seiner Welle 4 ein als einteiliges Spritzformteil hergestelltes Gebläserad 5, und wird von den beiden Gehäusehälften im Wesentlichen umschließend aufgenommen, in seiner Lage fixiert und mittels Dämpfungskörpern schwingungsisoliert gelagert.

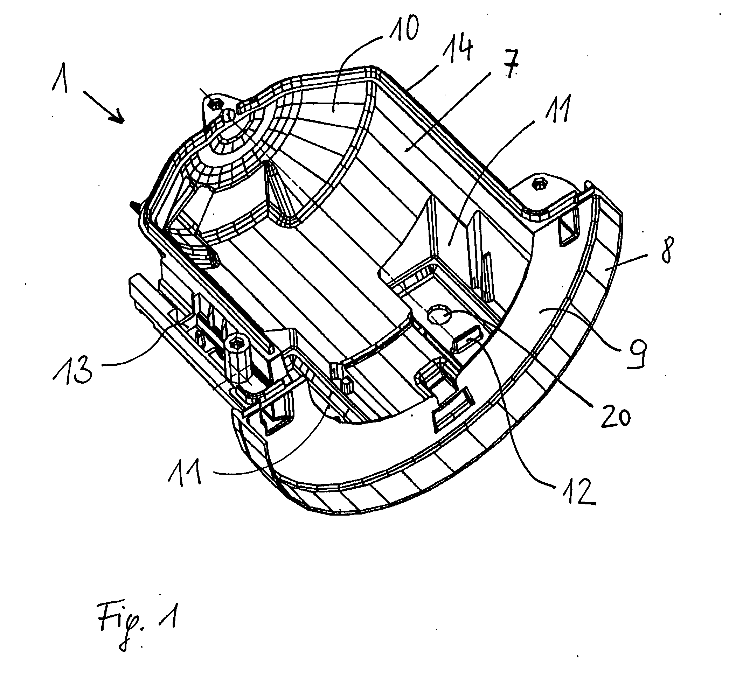

Im Detail ist in Fig.1 eine perspektivische Ansicht des unteren Gehäuseteils 1 dargestellt. Das einstückige Gehäuseteil 1 ist im Wesentlichen halbzylindrisch entlang der Achse des Gebläsemotors 3 ausgebildet, wobei das Gehäuseteil 1 eine Teilungsfläche in der Mittelebene aufweist. Die halbzylindrische Schalenform des Gehäuseteils 1 ist an der rückwärtigen Stirnseite mit einer Stirnwand 10 geschlossen. Die daran anschließende Mantelfläche 7 verläuft bis zu einer vorderseitigen Stirnwand 9, wobei die Stirnwand 9 eine Öffnung konzentrisch zur Motorachse aufweist und sich in radialer Richtung über die Mantelfläche 7 hinweg erstreckt. Am umfänglichen Ende der Stirnwand 9 ist eine ringförmige Erweiterung 8 vorgesehen, die einen Radius aufweist, der größer ist, als der eines aufzunehmenden Gebläserads 5.

Die Mantelfläche 7 wird durch zwei nach außen verlaufende Ausnehmungen 11 durchbrochen. Die Ausnehmungen 11 sind im Wesentlichen symmetrisch zur Mittelachse des Gehäuseteils 7 angeordnet und weisen in Draufsicht einen im Wesentlichen rechteckigen Querschnitt auf. Die Abschlussfläche der Ausnehmungen 11 ist parallel zur Trennebene des Gehäuseteils ausgeführt und weist eine Rippe 12, sowie eine kreisförmige Öffnung 20 auf.

Von der Mantelfläche 7 außen abragend ist im Bereich, beziehungsweise vom Bereich der Trennebene abgehend ein Aufnahmeelement 13 ausgebildet. Dieses Aufnahmeelement 13 ist im Wesentlichen als Hohlkörper mit offenen Wandungen ausgestaltet, so dass sich eine quaderförmige Öffnung bildet, in welche ein Element für eine elektrische Steckerverbindung einlegbar ist. Ferner sind an Vorder- und Rückseite Öffnungen vorgesehen, durch die Kabel und/oder oder ein Stecker durchführbar und/oder einschiebbar sind.

In der Trennebene weist das Gehäuseteil 1 zumindest bereichsweise einen Steg 14 auf.

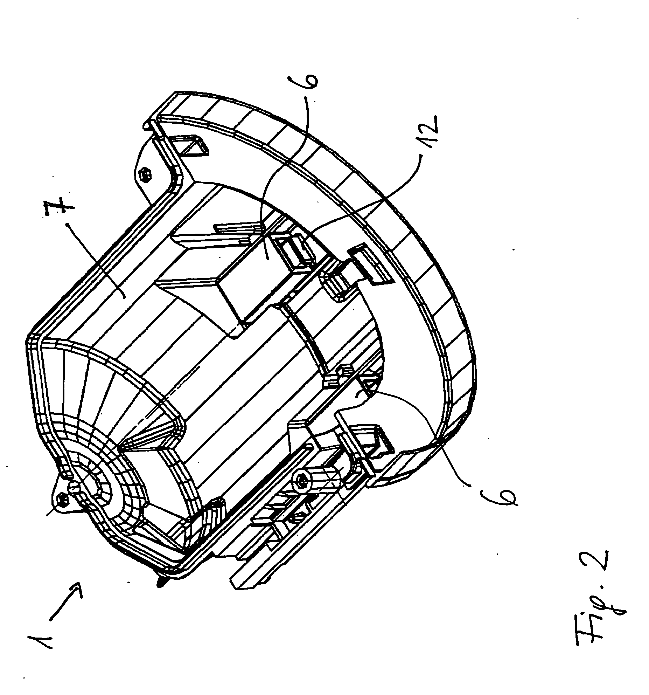

Fig. 2 zeigt das untere Gehäuseteil 1 in derselben perspektivischen Darstellung wie Fig. 1, wobei in die Ausnehmungen 11 quaderförmige Dämpfungskörper 6 eingebracht sind. Ein solcher Dämpfungskörper 6 besteht aus einem elastomeren Kunststoff, vorzugsweise aus Silikon und wird zwischen der Rippe 12 und dem rückwandigen Teil der Ausnehmung 11 reib- und/oder formschlüssig gehalten. Vorliegend ist der Dämpfungskörper mit einem durchgehenden Hohlraum ausgeführt.

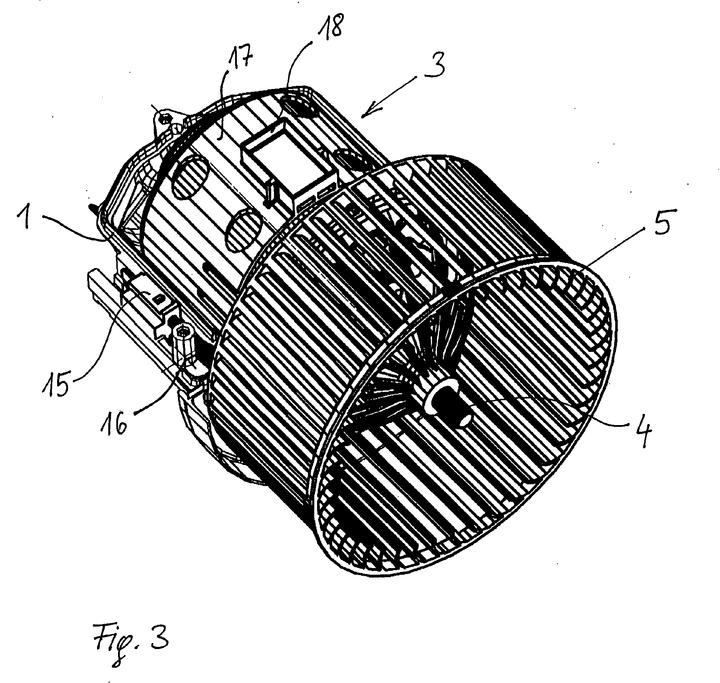

Das Gehäuseteil 1 ist mit eingelegtem Gebläsemotor 3 und einem auf der Welle 4 des Motors befestigten Gebläserad 5 in Fig. 3 dargestellt. Der Gebläsemotor 3 ist von einer umfänglichen Einfassung 17 umschlossen, die sich an den in den Aufnahmeausnehmungen 11, eingelegten Dämpfungskörpern 6 abstützt. Die im Wesentlichen zylindrische Einfassung 17 ist an der Oberseite mit einem rechteckförmigen Aufnahmeschacht 18 ausgeführt. In den Schacht 18 ist ein quaderförmiger Dämpfungskörper 6 einlegbar. An der Unterseite der Einfassung 17 befinden zwei nicht dargestellte Aufnahmeschächte 18, die so ausgeführt sind, dass ein im Wesentlichen baugleicher Dämpfungskörper 6 aufgenommen werden kann. Die unteren Aufnahmeschächte 18 stützen den Gebläsemotor 3 mit der Einfassung 17 an den in Fig. 2 dargestellten Dämpfungskörpern 6 gegen das Gehäuseteil 1 ab.

In das Aufnahmeelement 13 ist gemäß der Darstellung in Fig. 3 ein Element für eine elektrische Steckerverbindung 15 eingeschoben, welches reib- und/oder formschlüssig im Aufnahmeelement 13 fixiert ist. Von diesem Element 15 abgehend sind elektrische Leitungen 16 zur Versorgung des Gebläsemotors ausgebildet, wobei im Aufnahmeelement 13 dafür eine Öffnung vorgesehen ist.

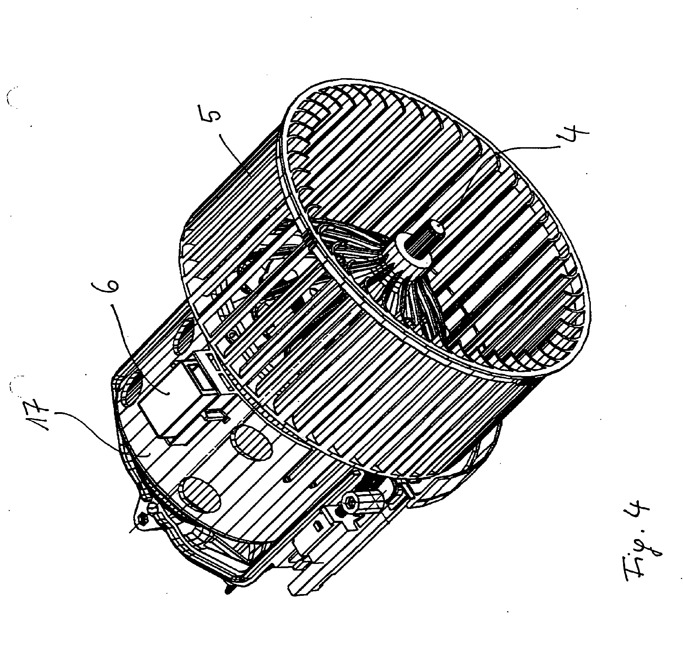

Fig. 4 zeigt in Ahnlehnung an Fig. 3 das untere Gehäuseteil 1 mit eingelegtem Gebläsemotor 3 und einem auf der Welle 4 des Motors befestigten Gebläserad 5, wobei in den oberen Schacht 18 ebenfalls ein quaderförmiger Dämpfungskörper 6 eingelegt ist, welcher im Schacht 18 reib- und/oder formschlüssig fixiert ist und einen Hohlraum aufweist.

In Fig. 5 ist die in Fig. 4 dargestellte Anordnung mit dem auf das untere Gehäuseteil 1 aufgesetzten Gehäuseteil 2 abgebildet. Das Gehäuseteil 2 ist im Wesentlichen spiegelbildlich zum Gehäuseteil 1 ausgebildet, jedoch weist dieses nur eine Aufnahmeausnehmung 11 zum Einlegen eines Dämpfungskörpers 6, auf der in der Fig. 5 nicht sichtbaren Innenseite des Gehäuseteils 2 auf, wobei die Aufnahmeausnehmung 11 korrespondierend zum Aufnahmeschacht 18 ausgeführt ist, das heißt das diese gemeinsam mit dem Schacht 18 den eingelegten Dämpfungskörper umschließt. Entlang der Trennebene ist am Gehäuseteil 1 zumindest bereichsweise eine Nut ausgebildet, die den im Gehäuseteil 2 ausgeführten Steg aufnimmt, so dass die beiden Gehäusehälften 1 und 2 formschlüssig in ihrer Trennebene zueinander fixiert sind. In der Gesamtheit ergeben sich somit drei umfänglich, in einem Winkelabstand von ca. 120° angeordnete Dämpfungskörper 6 die den Motor 3 beziehungsweise die Einfassung 17 gegen das Gehäuse abstützen und schwingungsdämpfend beziehungsweise schwingungsisolierend wirken.

Durch die axiale Gehäuseteilung bietet das in den Figuren 1 bis 5 dargestellte Ausführungsbeispiel den Vorteil einer einfachen Montage der Dämpfungskörper und eines Elements für eine elektrische Steckerverbindung.

In weiteren nicht dargestellten erfindungsgemäßen Ausführungsformen können auch mehr als drei Dämpfungskörper 6 mit entsprechend an den Gehäuseteilen 1 und 2 vorgesehenen Ausnehmungen 11 und dazu korrespondierenden Aufnahmeschächten 18 ausgebildet sein. Die Quaderform der Dämpfungskörper 6 ist exemplarisch zu verstehen, diese können in nicht dargestellten Varianten der Erfindung auch tonnen- oder kissenförmig oder allgemein eine an die Ausnehmungen 11 und/oder Schächte 18 angepasste Kontur haben.

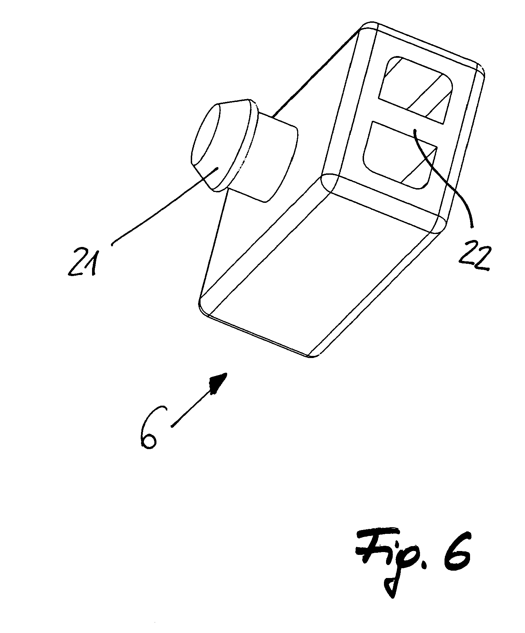

Eine zweite, alternative Ausführungsform eines Dämpfungskörpers 6 ist in Fig. 6 dargestellt. Der aus Silikon bestehende quaderförmige Dämpfungskörper 6 weist einen Hohlraum auf, der von einem Mittelsteg 22 durchzogen wird. An einer Seitenfläche ist eine Rastnase 21 mit einem zylindrischen Zapfen und einem kegelstumpfartigen Ende ausgebildet. Der Dämpfungskörper 6 wird durch Einrasten der Rastnase 21 in die kreisförmige Öffnung 20 in den Gehäuseteilen positioniert bzw. fixiert. Durch das Durchgreifen der Öffnung 20 durch die Rastnase 21 ist von außerhalb der Gehäuseteile einfach erkennbar ob ein Dämpfungskörper 6 bereits am dafür vorgesehenen Ort platziert ist. Insbesondere für eine automatisierte Montage kann über eine optische Abfrage, beispielsweise mittels eines Lasers, das Fehlen eines Dämpfungskörpers vor dem Endzusammenbau oder der Auslieferung festgestellt werden.

Die Figuren 1 bis 5 zeigen im Wesentlichen auch die erforderlichen Montageschritte zum Zusammenbau eines Gehäuses mit einem Gebläsemotor 3. In einem ersten Schritt werden in das untere Gehäuseteil 1 gemäß Fig. 2 zwei Dämpfungskörper 6 in die dafür vorgesehenen Aufnahmeausnehmungen 11 eingelegt. In einem zweiten Schritt wird der Gebläsemotor 3 in das Gehäuseteil 2 eingelegt, wobei das Gebläserad 5 am Gebläsemotor 3 vorteilhafterweise vormontiert ist. Ein Element für die elektrische Steckerverbindung 15 sowie die zum Motor führenden elektrischen Leitungen 16 werden in das Aufnahmeelement 13 eingebracht. Nach Fig. 4 wird im dritten Schritt ein Dämpfungskörper 6 in den Aufnahmeschacht 18 der Einfassung 17 des Gebläsemotors eingelegt. Alternativ dazu könnte der Dämpfungskörper 6 auch in das obere Gehäuseteil 1 eingelegt werden. Gemäß Fig.5 wird das obere Gehäuseteil 1 auf das untere Gehäuseteil 2 gesetzt und mit diesem verbunden. Vorteilhafterweise erfolgt dies durch eine Schraubverbindung. Alternativ können die beiden Gehäusehälften auch zusammengeclipst oder von außen mit einer Klammer befestigt werden.

## Patentansprüche

1. Gehäuse mit einem Elektromotor, insbesondere einem Gebläsemotor (3), bestehend aus zumindest einem ersten und einem zweiten Gehäuseteil (1, 2) mit einer gemeinsamen Trennebene, wobei die Trennebene im Wesentlichen durch eine Ebene in der die Motorachse liegt oder einer dazu parallelen Ebene gebildet wird, wobei zumindest ein Gehäuseteil (1, 2) auf der Innenseite zumindest eine Aufnahmeausnehmung (11) aufweist, wobei der Elektromotor eine umfängliche Einfassung (17) aufweist, **dadurch gekennzeichnet, dass** die umfängliche Einfassung (17) mit zu den Aufnahmeausnehmungen (11) des Gehäuses korrespondierenden Aufnahmeschächten (18) ausgestattet ist und in zumindest eine Aufnahmeausnehmung (11) ein Dämpfungskörper (6) eingelegt ist.

2. Gehäuse nach Anspruch 1, **dadurch gekennzeichnet, dass** zumindest ein Gehäuseteil (1, 2) auf der Innenseite zumindest zwei Aufnahmeausnehmungen (11) aufweist.

3. Gehäuse nach Anspruch 1, **dadurch gekennzeichnet, dass** die zumindest 2 Gehäuseteile (1, 2) auf der Innenseite insgesamt zumindest drei Aufnahmeausnehmungen (11) aufweisen.

4. Gehäuse nach einem der vorangehenden Ansprüche, **dadurch gekennzeichnet, dass** der Dämpfungskörper (6) form- oder reibschlüssig in seiner Lage in der Ausnehmung (11) fixiert ist.

5. Gehäuse nach einem der vorangehenden Ansprüche, **dadurch gekennzeichnet, dass** in einer ersten Gehäusehälfte (1) zwei im Wesentlichen symmetrisch zur Mittelachse des Gehäuses angeordnete Aufnahmeausnehmungen (11) ausgebildet sind, in die jeweils ein Dämpfungskörper (6) einlegbar ist.

6. Gehäuse nach einem der vorangehenden Ansprüche, **dadurch gekennzeichnet, dass** in einer zweiten Gehäusehälfte (2) eine im Wesentlichen mittig des Umfangs angeordnete Aufnahmeausnehmung (11) ausgebildet ist.

7. Gehäuse nach einem der vorangehenden Ansprüche, **dadurch gekennzeichnet, dass** in einer ersten Gehäusehälfte (1) ein Aufnahmeelement (13) im Bereich der Trennebene ausgebildet ist.

8. Gehäuse nach einem der vorangehenden Ansprüche, **dadurch gekennzeichnet, dass** in einer zweiten Gehäusehälfte (2) ein Aufnahmeelement (13) im Bereich der Trennebene, korrespondierend zum Aufnahmeelement (13) der ersten Gehäusehälfte (1) ausgebildet ist.

9. Gehäuse nach einem der vorangehenden Ansprüche, **dadurch gekennzeichnet, dass** in das Aufnahmeelement (13) im Bereich der Trennebene ein Element für eine elektrische Steckerverbindung (15) einlegbar ist.

10. Gehäuse nach einem der vorangehenden Ansprüche, **dadurch gekennzeichnet, dass** das Element für eine elektrische Steckerverbindung (15) form- oder reibschlüssig in seiner Lage in dem Aufnahmeelement (13) im Bereich der Trennebene fixierbar ist.

11. Gehäuse nach einem der vorangehenden Ansprüche, **dadurch gekennzeichnet, dass** eine erste Gehäusehälfte (1) in der Trennebene einen zumindest bereichsweise umlaufenden federartigen Steg (14) und eine zweite Gehäusehälfte (2) in der Trennebene eine zumindest bereichsweise umlaufende Nut aufweist.

12. Gehäuse nach einem der vorangehenden Ansprüche, **dadurch gekennzeichnet, dass** die Gehäusehälften (1, 2) in der Trennebene mittels einer Nut/Feder Verbindung zusammensteckbar sind.

13. Gehäuse nach einem der vorangehenden Ansprüche, **dadurch gekennzeichnet, dass** die Aufnahmeausnehmungen (11) in einem Winkelabstand von jeweils 120° angeordnet sind.

14. Gehäuse nach einem der vorangehenden Ansprüche, **dadurch gekennzeichnet, dass** die erste und zweite Gehäusehälfte (1, 2) miteinander verclipsbar sind.

15. Gehäuse nach einem der vorangehenden Ansprüche, **dadurch gekennzeichnet, dass** die erste und zweite Gehäusehälfte (1, 2) durch außen am Gehäuse vorgesehene Klammern in ihrer Lage zueinander fixierbar sind.

16. Gehäuse nach einem der vorangehenden Ansprüche, **dadurch gekennzeichnet, dass** die erste und zweite Gehäusehälfte (1, 2) miteinander verschraubt sind.

17. Klimatisierungs- und/oder Heizeinrichtung, insbesondere für ein Kraftfahrzeug mit einem Gebläse, einem Heizelement, mindestens einem Steuerelement zur Beeinflussung von Luftströmungen und/oder einem Verdampfer **dadurch gekennzeichnet, dass** diese ein Gehäuse gemäß mindestens einem der vorhergehenden Ansprüche enthält.

18. Verfahren zur Montage eines Elektromotors, insbesondere eines Gebläsemotors (3) mit einem Gehäuse gemäß den vorangehenden Ansprüchen **dadurch gekennzeichnet, dass**
a.) in eine erste Gehäusehälfte (1) Dämpfungskörper (6) in zumindest eine Aufnahmeausnehmung (11) eingelegt werden,
b.) der Elektromotor mit einer umfänglichen Einfassung (17) in die erste Gehäusehälfte (1) eingelegt wird
c.) in ein Aufnahmeelement (13) der ersten Gehäusehälfte (1) ein Element für eine elektrische Steckerverbindung (15), welches eine elektrische Verbindung zum Elektromotor herstellt, eingelegt wird,
d.) ein Dämpfungskörper (6) in einen Aufnahmeschacht (18) an der Einfassung (17) des Elektromotors an der, der ersten Gehäusehälfte (1) abgewandten Seite eingelegt wird,
e.) eine zweite Gehäusehälfte (2) auf die erste Gehäusehälfte (1) gesteckt wird und
f.) die Gehäusehälften (1, 2) miteinander verbunden, insbesondere verschraubt werden.

## Claims

1. A housing having an electric motor, in particular a fan motor (3), consisting of at least one first and one second housing part (1, 2) with a common parting plane, wherein the parting plane is substantially formed by a plane in which the motor axis lies or a plane parallel thereto, wherein at least one housing part (1, 2) has at least one receiving recess (11) on the inside, wherein the electric motor has a circumferential rim (17), **characterised in that** the circumferential rim (17) is provided with receiving shafts (18) corresponding to the receiving recesses (11) of the housing, and a damping body (6) is inserted into at least one receiving recess (11).

2. The housing according to claim 1, **characterised in that** at least one housing part (1, 2) has at least two receiving recesses (11) on the inside.

3. The housing according to claim 1, **characterised in that** the at least 2 housing parts (1, 2) have at least a total of three receiving recesses (11) on the inside.

4. The housing according to one of the preceding claims, **characterised in that** the damping body (6) is positively or frictionally fixed in its position inside the recess (11).

5. The housing according to one of the preceding claims, **characterised in that** two receiving recesses (11) which are arranged substantially symmetrically to the central axis of the housing and into each of which a damping body (6) can be inserted, are formed in a first half of the housing (1).

6. The housing according to one of the preceding claims, **characterised in that** a receiving recess (11) which is arranged substantially centrically to the circumference is formed in a second half of the housing (2).

7. The housing according to one of the preceding claims, **characterised in that**, in a first half of the housing (1), a receiving element (13) is formed in the area of the parting plane.

8. The housing according to one of the preceding claims, **characterised in that**, in a second half of the housing (2), a receiving element (13) is formed in the area of the parting plane, corresponding to the receiving element (13) of the first half of the housing (1).

9. The housing according to one of the preceding claims, **characterised in that** an element for an electrical plug connection (15) can be inserted into the receiving element (13) in the area of the parting plane.

10. The housing according to one of the preceding claims, **characterised in that** the element for an electrical plug connection (15) can be positively or frictionally fixed in its position in the receiving element (13) in the area of the parting plane.

11. The housing according to one of the preceding claims, **characterised in that** a first half of the housing (1) has an at least partially circumferential spring-like bar (14) in the parting plane and a second half of the housing (2) has an at least partially circumferential groove in the parting plane.

12. The housing according to one of the preceding claims, **characterised in that** the halves of the housing (1, 2) are intermateable in the parting plane by means of a groove/feather connection.

13. The housing according to one of the preceding claims, **characterised in that** the receiving recesses (11) are each arranged at an angular distance of 120°.

14. The housing according to one of the preceding claims, **characterised in that** the first and second halves of the housing (1, 2) can be clipped to one another.

15. The housing according to one of the preceding claims, **characterised in that** the first and second halves of the housing (1, 2) are mutually fixable in their position through clips provided on the outside of the housing.

16. The housing according to one of the preceding claims, **characterised in that** the first and second halves of the housing (1, 2) are screwed together.

17. An air conditioning and/or heating unit, in particular for a vehicle, having a fan, a heating element, at least one control element for influencing air flows and/or an evaporator, **characterised in that** it includes a housing according to at least one of the preceding claims.

18. A method for installing an electric motor, in particular a fan motor (3), with a housing according to the preceding claims, **characterised in that**
a.) damping bodies (6) are inserted into at least one receiving recess (11) of a first half of a housing (1);
b.) the electric motor with a circumferential rim (17) is inserted into the first half of the housing (1);
c.) an element for an electrical plug connection (15), which establishes an electrical connection to the electric motor, is inserted into a receiving element (13) of the first half of the housing (1);
d.) a damping body (6) is inserted into a receiving shaft (18) on the rim (17) of the electric motor on the side facing away from the first half of the housing (1);
e.) a second half of the housing (2) is plugged onto the first half of the housing (1); and
f.) the halves of the housing (1, 2) are connected to each other, in particular screwed together.

## Revendications

1. Boîtier comprenant un moteur électrique, en particulier un moteur de ventilateur (3), ledit boîtier se composant au moins d'une première et d'une seconde partie de boîtier (1, 2) ayant un plan de séparation commun, où le plan de séparation passe pratiquement par un plan dans lequel se situe l'axe du moteur, ou bien est formé dans un plan parallèle à l'axe du moteur, où au moins une partie de boîtier (1, 2) présente, sur le côté intérieur, au moins un évidement de logement (11), où le moteur électrique présente une large bordure (17), **caractérisé en ce que** la large bordure (17) est dotée de puits de réception (18) correspondant aux évidements de logement (11) du boîtier, et un corps amortisseur (6) est inséré dans au moins un évidement de logement (11).

2. Boîtier selon la revendication 1, **caractérisé en ce qu'**au moins une partie de boîtier (1, 2) présente, sur le côté intérieur, au moins deux évidements de logement (11).

3. Boîtier selon la revendication 1, **caractérisé en ce que** les parties de boîtier (1, 2) au moins au nombre de 2 présentent, sur le côté intérieur, au total au moins trois évidements de logement (11).

4. Boîtier selon l'une quelconque des revendications précédentes, **caractérisé en ce que** le corps amortisseur (6) est fixé dans sa position, dans l'évidement (11), par complémentarité de forme ou par frottement.

5. Boîtier selon l'une quelconque des revendications précédentes, **caractérisé en ce que** deux évidements de logement (11) sont configurés dans la première moitié (1) du boîtier, en étant disposés pratiquement de façon symétrique par rapport à l'axe médian du boîtier, évidements de logement dans lesquels un corps amortisseur (6) peut être introduit à chaque fois.

6. Boîtier selon l'une quelconque des revendications précédentes, **caractérisé en ce qu'**un évidement de logement (11) est configuré dans une seconde moitié (2) du boîtier, en étant disposé pratiquement au milieu de la circonférence.

7. Boîtier selon l'une quelconque des revendications précédentes, **caractérisé en ce que**, dans une première moitié (1) du boîtier, un élément de logement (13) est configuré en se situant dans la zone du plan de séparation.

8. Boîtier selon l'une quelconque des revendications précédentes, **caractérisé en ce que**, dans une seconde moitié (2) du boîtier, un élément de logement (13) situé dans la zone du plan de séparation est configuré en correspondant à l'élément de logement (13) de la première moitié (1) du boîtier.

9. Boîtier selon l'une quelconque des revendications précédentes, **caractérisé en ce qu'**un élément pour une connexion électrique enfichable (15) peut être inséré dans l'élément de logement (13) situé dans la zone du plan de séparation.

10. Boîtier selon l'une quelconque des revendications précédentes, **caractérisé en ce que** l'élément pour une connexion électrique enfichable (15) peut être fixé dans sa position, par complémentarité de forme ou par frottement, dans l'élément de logement (13) situé dans la zone du plan de séparation.

11. Boîtier selon l'une quelconque des revendications précédentes, **caractérisé en ce qu'**une première moitié (1) du boîtier présente, dans le plan de séparation, une nervure (14) de type languette au moins partiellement circulaire, et une seconde moitié (2) du boîtier présente, dans le plan de séparation, une rainure au moins partiellement circulaire.

12. Boîtier selon l'une quelconque des revendications précédentes, **caractérisé en ce que** les moitiés (1, 2) du boîtier peuvent être emboîtées, dans le plan de séparation, au moyen d'un assemblage mâle / femelle.

13. Boîtier selon l'une quelconque des revendications précédentes, **caractérisé en ce que** les évidements de logement (11) sont disposés suivant une distance angulaire à chaque fois de 120°.

14. Boîtier selon l'une quelconque des revendications précédentes, **caractérisé en ce que** la première et la seconde moitié (1, 2) du boîtier peuvent être clipsées l'une avec l'autre.

15. Boîtier selon l'une quelconque des revendications précédentes, **caractérisé en ce que** la première et la seconde moitié (1, 2) du boîtier peuvent être fixées dans leur position, l'une par rapport à l'autre, par des brides de fixation prévues en étant placées à l'extérieur sur le boîtier.

16. Boîtier selon l'une quelconque des revendications précédentes, **caractérisé en ce que** la première et la seconde moitié (1, 2) du boîtier sont vissées l'une à l'autre.

17. Dispositif de climatisation et / ou de chauffage, en particulier pour un véhicule automobile, comprenant un ventilateur, un élément chauffant, au moins un élément de commande servant à influencer des écoulements d'air et / ou comprenant un évaporateur, **caractérisé en ce que** ce dispositif de climatisation et / ou de chauffage comprend un boîtier selon au moins l'une quelconque des revendications précédentes.

18. Procédé de montage d'un moteur électrique, en particulier d'un moteur de ventilateur (3) comprenant un boîtier selon l'une quelconque des revendications précédentes, **caractérisé en ce que**
a.) des corps amortisseurs (6) sont insérés dans au moins un évidement de logement (11) situé dans une première moitié (1) du boîtier,
b.) le moteur électrique ayant une large bordure (17) est inséré dans la première moitié (1) du boîtier,
c.) un élément pour une connexion électrique enfichable (15) est inséré dans un élément de logement (13) de la première moitié (1) du boîtier, lequel élément de connexion établit une connexion électrique avec le moteur électrique,
d.) un corps amortisseur (6) est inséré dans un puits de réception (18) situé sur la bordure (17) du moteur électrique, ledit puits de réception se trouvant sur le côté opposé à la première moitié (1) du boîtier,
e.) une seconde moitié (2) du boîtier est emboîtée sur la première moitié (1) du boîtier, et
f.) les deux moitiés (1, 2) du boîtier sont assemblées, en particulier vissées l'une à l'autre.
